# EUROPEAN PATENT SPECIFICATION

(11) **EP 2 099 340 B1**
(45) Date of publication and mention of the grant of the patent: **23.04.2014**
(21) Application number: 07870406.1
(22) Date of filing: 21.11.2007
(51) Int. Cl.: A47J 29/02

(54) **EGG COOKING UTENSIL**
EIERKOCHER
USTENSILE POUR LA CUISSON DES OEUFS

(30) Priority: 21.11.2006 GB 0623155; 20.11.2007 GB 0723051
(43) Date of publication of application: 16.09.2009
(73) Proprietor: POWELL, Brian, Shifnal, Shropshire TF11 9AF (GB)
(72) Inventor: POWELL, Brian, Shifnal, Shropshire TF11 9AF (GB)
(74) Representative: Lincoln, Ben James
(86) International application number: PCT/GB2007/004458
(87) International publication number: WO 2008/068457

(56) References cited:
- WO-A1-2007/056050
- DE-U1- 29 717 825
- FR-A- 2 655 830
- GB-A- 2 253 551
- GB-A- 2 417 669
- US-A- 3 017 492
- US-A- 3 505 498
- US-A- 3 704 663
- US-A- 4 488 479
- US-A- 4 759 342

## Description

This invention related to cooking eggs without shells.

### Background

This invention solves the problems of cooking eggs by frying or poaching.
When frying an egg one needs quite a lot of oil, some skill to cook an egg of consistent quality, i.e. with no burnt parts, or with a soft yoke but still with all the white cooked. When one requires an egg "over easy" as in America this is to get all the white cooked whilst still keeping a soft yoke. This requires a skillet or same and it is very easy to break the yoke.

With poaching in water, the water must first be heated to the correct temperature. This takes time, and even more skill is required to cook correctly. Often the egg breaks up in the water.
By using a traditional egg poaching pan, one has to test the eggs several times, and inevitably some white is left uncooked. This method always takes the longest time. A boiled egg takes about 3- 5 minutes. Currently egg cooking equipment exists for cafes whereby both bottom and top lids are electrically heated. These are heavy, expensive, cumbersome and energy inefficient. The eggs are cooked in "old" fat and the eggs often get "brown burn pieces" on them. The eggs can be consistently cooked only by a trained and experience cook, they can easily be under or overcooked, or of inconsistent shape.

### Background -previous patents

Frying and basting with steam is not new, examples as early as 1950 have been found. However our testing and development has clearly shown the inadequacies of previous designs.

This patent provides an improvement to and co-ordinates the cooking methods described in patent GB2417669. In particular to the heating and the controls which replicate the cooking cycle so that even a person with no knowledge can use the equipment.

Note! This patent starts to describe an electronic control system that will be fully described in a new future patent.

Our development process has been targeted at the needs of two user groups - home users and catering users.
For home users, features such as cost, easy of use, size are most important.
For catering users, features such as performance, speed, cleaning, service and serving to the plate are important.

US 3704663 discloses an egg cooker of skillet-type having a central water compartment for generating steam. FR 2655830 discloses a container for cooking food.

### Description of invention

According to the invention, we provide an egg cooking appliance as defined in claim 1.

An egg cooking utensil for cooking eggs without shells that uses direct heat and steam in co-ordination to cook eggs quickly, economically, and consistently.

The invention has separate egg cooking and steam generation zones or plates.
These are heated with integrated heat coils or thick film or induction or the like.
A close fitting lid covers at least one steam and egg area. A small quantity of water is boiled on the steam zone which expands into the void made between the steam and egg areas and the outer raised section, heating it and the void up quickly.

Controls allow for at least one programmed (replicated) cooking cycle but capable of different cooking programmes such as poach or fry.
A simple cooking cycle is controlled by a bi-metal switch which together with a designed plate mass and power input offers an expected egg heat up curve or map. Adjusting the bi-metal switch, heat mass and power input affects the heat up curve which can be used to model an expected cook cycle (how the operator cooks the egg).
Loading the egg into the egg cooking plate causes a temperature drop.
By using electronic controls the energy input can be dynamic (change during the cook cycle), it can also hold more than one programmed cook cycle. This not only allows for multiple cook modes but allows for a quicker cook cycle.
More sophisticated controls are described in a future patent.

### Advantages.

Our design uses a cooking plate with little mass and direct heat or integrated heating elements. This allows quick heat up and low energy usage. Each egg can be cooked in its own plate and this keeps the size more constant and allows the quality to be increased, the eggs always look the same for any cooking cycle.
Bi-metal or electronic controls combined with the low plate mass allows for quick responses to temperature increases this allows replication of a cooking cycle. The temperature drop when an egg is loaded is the fundamental feature to start of the cook cycle and hence a reproducible egg.
Water and eggs are kept separate. This allows the egg to steam and not get mixed with water which produces a partially or badly cooked egg.
The void under the lid is small so that little water is used, in fact only about 1 teaspoon is needed, the void and lid heat up quickly and the water is completely boiled away during the cooking cycle, therefore the cooking operation is inherently safe.

Our testing with different lids, metal, glass, plastic etc as proven that by keeping the temperature under the lid high, water does not condense and drop onto the egg or plate, which if occurring on a fry cycle will make hot oil splatter. Water condensing onto the eggs produces small craters as the egg is cooking and produces an undercooked egg of worse appearance.
Electronic controls allow for a more accurate (against the mapping or target cooking temperatures) designed cooking cycle and allows for one cooking utensil capable of multiple cooking cycles, i.e. large or small eggs, poach, fry, over easy, sunny up etc. More sophisticated controls are described in a later patent. Our controls will tell the user when the egg is cooked or when to put the egg into the machine.

These improvements enable eggs to be cooked in reduced time with minimal electrical power consumption and the results can be replicated without specialist skills every time. Earlier patents have not recognised that the lid, if being of heat reflective material can be heated by the steam and this will help to cook the tops of the eggs.
They have not recognised that the time it takes to cook is important; our design will cook in 60 seconds so that eggs can be cooked "freshly" at the counter for customers.

Separate steam and egg zones allow for separate heating and multiple cook cycles and allows plates to be washed, have the egg loaded outside the machine and allow eggs to be served readily to the customers' plate.

None of the previous designs have integrated heating elements and controls that can "map" a designed cooking cycle and replicate a desired egg quality.

Energy consumption in a one minute pre-heat and one minute cook phase only uses about 20 seconds at 800 watts.
The electronic version can allow for a short pre heat and then various cook modes.

Steam injection - we have experimented with creating the steam in a separate vessel. This is technically more complicated, more expensive to build, would offer cleaning complications due to lime scale. Components would need to be kept warm in order to stop steam condensing. A large quantity of steam would need to be pumped - water expands by 1500 times when boiled. This solution offers no benefits.

This patent shows improvements to:
Heat up time of the plate.
Little energy used.
Cooking time of egg.
Repeatability of quality due to electrical controls.
By "mapping" the heat up and cool down characteristics of the plates so that electrical controls can act in an intelligent way during the cooking process. The subject and details of these controls form a future patent.

### Problems with cited patents.

Cooking plates have a large mass - difficult to control.
They have no cooking cycle, the patents citing only get the plate temperature to a top limit.

Cooking plate mass large, slow to heat up, inefficient use of electricity.
Egg cooking area combined with where water is poured, or in such a way that eggs will mix with water during cooking - result is poor quality.
No integrated heater - contact poor, heating up slow and inefficient.
Can't monitor temperature of egg so next best thing is temperature of plate directly under egg.
Steam injection - us4512250 this has steam injection. Water expands 1500 times into steam. We use less than 1 cm cubed- this would mean pumping in 1500 cm cubed of steam. Steam would start to condense.
No heat controls
US2517167 lid is full of water so steam void will not heat up correctly -condensation will fall onto egg actual - cited in paragraph 15 column 2.
Simple heat control -No defined cooking cycle.
No user controls audio visual cooking. This leaves the quality of the egg down to the user.
Void large - minimise water
Void does not remain hot - water condenses.
US0032546 - this only indicates pan temperature and has no integrated heater and therefore no control.

### Introduction to Drawings

A preferred embodiment of the invention will be described in conjunction with the drawings, which show: the egg and cooking zones, heaters, lid.
1 egg cooking zone
2 steam making zone
3 outer ridge or raised portion
4 inner ridge or raised portion
5 integrated heating element
6 bonded heating element

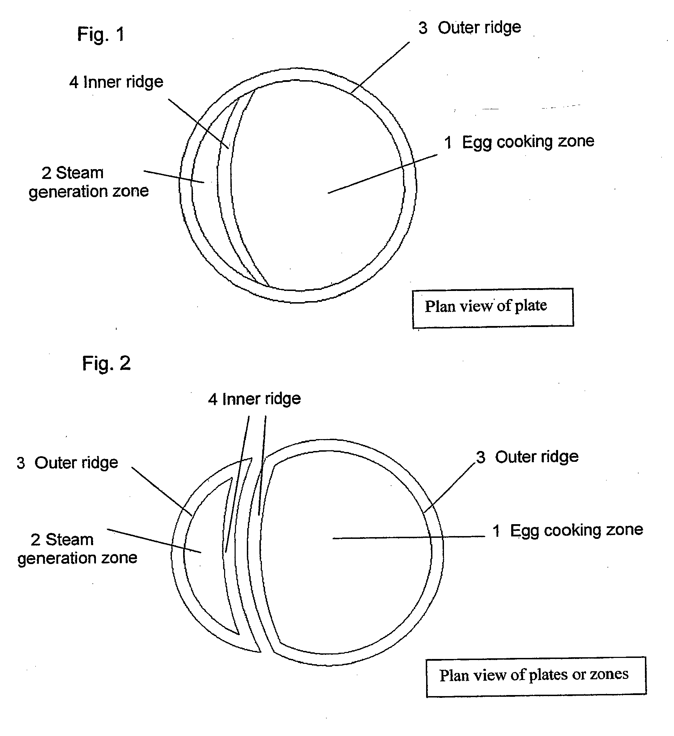

Fig1 Plan view of a plate containing one steam generation zone and one egg cooking zone, lid excluded for clarity.
Fig 2. Plan view of one separate steam generation zone and one separate egg cooking zone. Lid excluded for clarity. The shape of the steam and egg zone are not restricted to the shape shown.

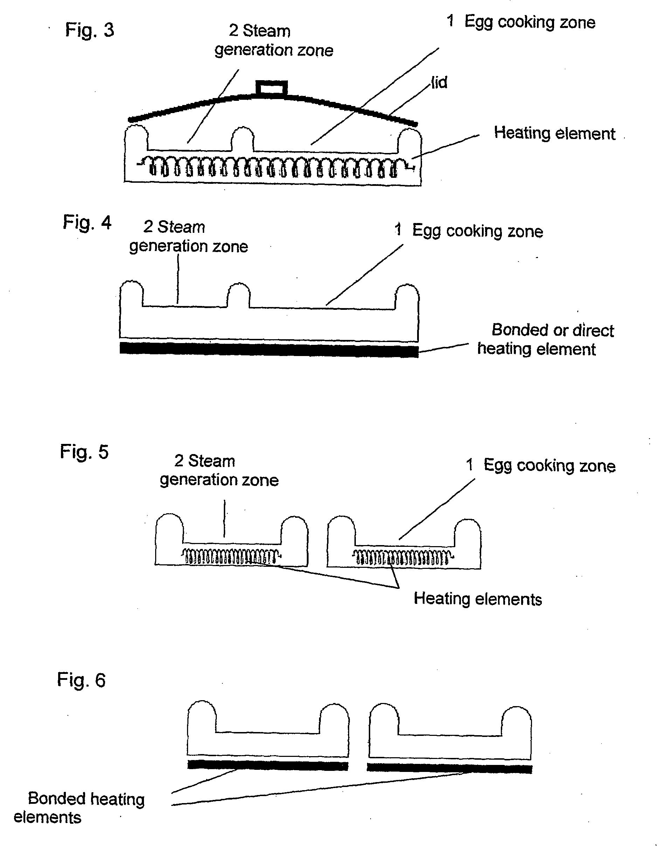

Fig 3. Shows a section of a plate containing egg and steam zone heated with at least one integrated element. Lid shown with aid of outer ridges form steam void.
Fig 4 shows a plate containing egg and steam zones heated with at least one thick film element or the like.
Fig 5 and 6 shows the lid and separate egg and steam areas each heated with elements or thick film or the like. At least one egg and one steam area has a lid.

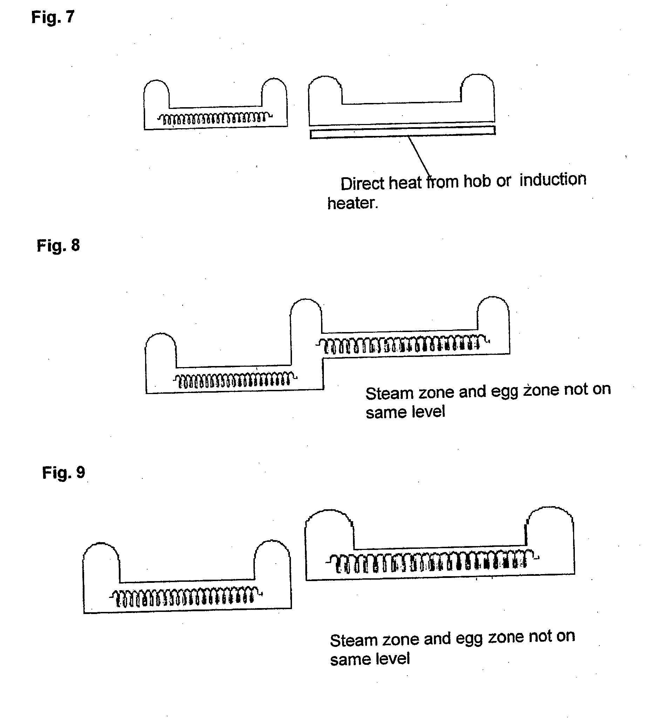

Fig 7 shows that with certain controls the areas can be heated with an electric hob or induction element or similar.
Fig 8 and 9 show that the egg and steam areas may be on different levels to aid water input for example injection under the cooking plate.
   Figs 10,11,12 13 are graphs of temperature and time showing how the heat up curve. This can be controlled with the bi-metal switch and adjustments of plate mass, expected egg mass (and temp), the energy input and the switch off-on range.
   For the electronic control, the energy input can be dynamic.
   There is a measurable temperature drop after the egg is placed, this is used to reset the bimetal switch and further heat up the plate.

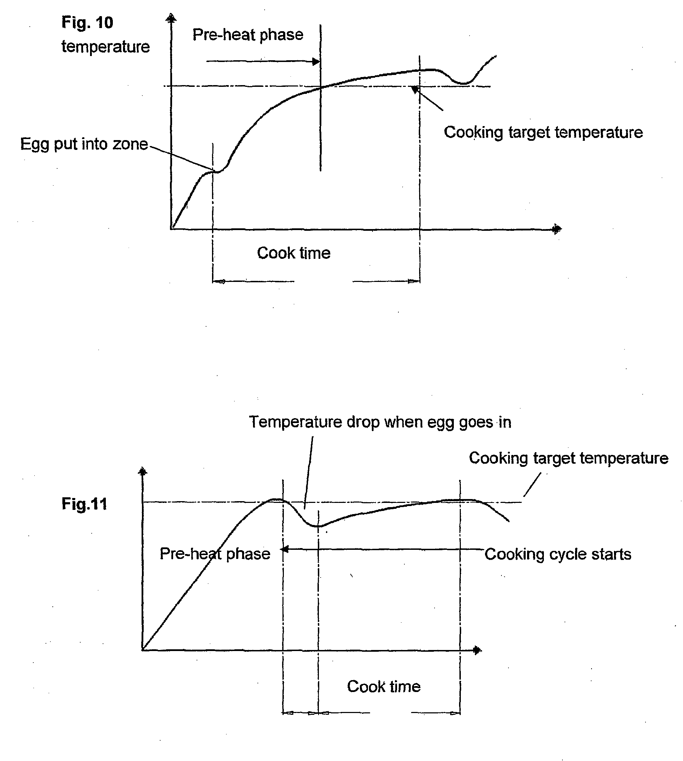

Fig 10 shows a "quick cook" heat up curve or mapping when the egg is placed in the egg area during the pre-heat phase.
Fig 11 shows a sample heat curve or mapping when a preheat temperature as been reached, then the egg placed and then the cook cycle.

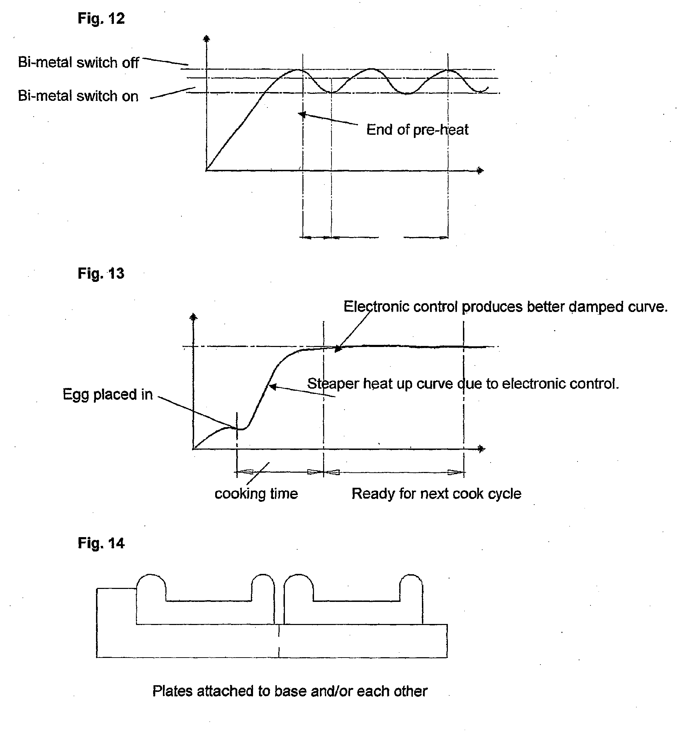

Fig 12 shows how the egg plate would be heated to pre-heat when using a bi-metal switch. The plate temperature would oscillate between the on and off positions waiting for input of the egg.
Fig 13 shows how the curve in fig 12 can be manipulated by using electronic controls.
Pre-heat curve is steeper so faster cooking, smoothing out the curve near the top temperature allows for a more accurate more accurate cook cycle - important when frying but not burning.
Fig 14 shows that the egg and or steam area can be designed to be part of, or detachably attached to a base machine that would hold controls, switches etc.

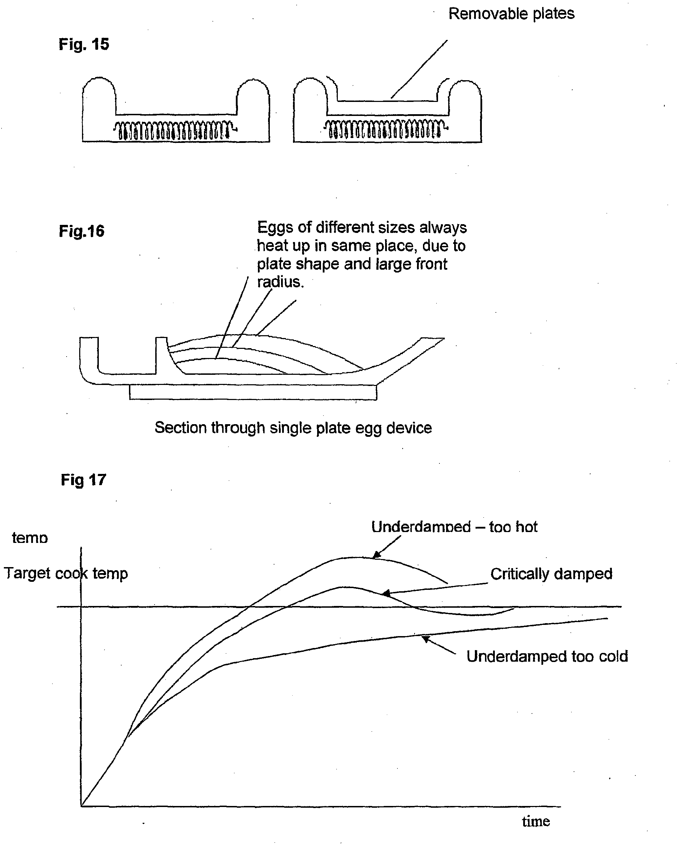

Fig 15 shows that the egg area may use a detachably attached plate which would enable easy cleaning or allow delivery to the eating plate.
Fig 16 is a cross section of a cooking plate showing how eggs of different sizes will cook in the same place due to shape of the plate and large front radius which also helps when removing the egg from the plate.
Fig 17 shows how the heat up curves can be under damped, over damped or critically damped.

### Detailed Description

The invention has separate egg cooking zones and steam generation zones in the form of "cooking plates", which are controlled to heat up via direct heat such as but not limited to an integrated element or thick film element. It is also possible with certain controls to use an electric hob or induction element or loop. Simple controls such as bimetal switches, thermistors or thermocouples allow heating up of the zones to be controlled at suitable temperatures to cook the egg from the bottom but also to generate steam.

An egg or eggs are places into the egg cooking zone or plate and a small quantity of water is placed into the steam making zone or plate. Co-ordination of the heating of the areas cooks the egg from below, and produces steam which heats up the area under the lid and the outer ridges of the plates or zones.

The invention relates to a utensil to cook "fried" eggs which programmes, controls and co-ordinates the variables in cooking the egg:
a. The surface area in contact with heat source, by having ridges or raised portions.
b. The speed that heat can be induced into the egg.
c. The time that the egg is cooked.
d. A method of cooking the top of the egg, in this case by cooking with steam where the amount of steam and co-ordination with the cook cycle can be controlled.

There are advantages in having the egg and steam areas together on one plate for cost benefits. This can consist of one plate, one switch (or control) and one heater.

However where one is cooking a large number of eggs, cleaning and service is important. In this case removable parts offer advantages. In this case the steam area and egg cooking area (which may or may not be adjoined) together with the lid behave in contiguous manner

Development of the heaters and their connectors offer some cleaning options. The parts can be washed in-situ, or removed to be cleaned by hand or in a dishwasher.

A close coupled lid, which enables the steam to remain for the cooking cycle encloses at least a steam zone and an egg zone so that a very small quantity of water expands into the void, heats up the lid and cooks the top of the egg. The steam zone also provides heat to keep the void hot. Keeping the void hot reduces the water needed, stops condensation, speeds up cooking, avoids oil spitting - all of which means that a cooking cycle can be controlled which in turn means consistently cooked eggs.

A simple set of user controls with visual and audible warnings in co-ordination with the heat sources and temperature switches/sensors allow one or more cooking programmes to be defined, for example slow poach, quick poach, fried etc. For example during a poach cycle no oil is used and a lower cooking temperature, whilst for frying a small quantity of oil is used together with a higher cook temperature. For a sunny egg no water is used with a lower temperature and longer duration. Over easy eggs can be produced by turning the egg and cooking on both sides.

The invention allows eggs to be cooked to an expected heat up curve in particular how it is damped. The energy input is balanced with the plate and egg mass and must be designed to allow a target cooking temperature and duration in order to replicate each cooking mode. The cooking mode is poach, fry, over easy, sunny side up or different sizes etc.

For a café version it is possible to use a lid that covers more than one steam zone and more than one egg zones or provide a larger egg zone so that 2 or more eggs can be cooked together.
Several "cooking plates" could be combined together for a "catering" appliance, each having shared or separate controls.

For optimum cooking quality (repeatability) one lid and control set per egg zone and steam zone is preferred but not essential.

The cooking cycle may be controlled to reach a "pre-heat" temperature, the egg is then placed into the cooking zone, water added to the steam zone, lid closed and the cook phase started. The placing of the egg onto the cooking plate causes a significant temperature drop on the plate. The plate regains heat and the heating elements are so designed that adequate heat is generated under the steam zone to produce steam. The cook phase allows a maximum cooking temperature or maximum cooking time to be reached. There may be audible and visual means of showing that the equipment is in standby mode, in pre-heat zone, has attained cook temperature, in cooking phase and finished.

Steam is generated above 100 deg c. Between 110 c and about 140 degrees c is the optimum temperature to poach an egg. Temperatures close to 160 -180 deg c can be used to fry the bottom of the egg.
By using separate plates and heaters in co-ordination it is possible to reduce the cooking cycle to a minimum time whilst maintaining egg quality and repeatability. For example to fry the bottom of the egg crisp requires a plate temperature about 180 degrees c but this would boil water away too quickly. In a working situation cooking many eggs there may be a safety concern with hot steam. Co-ordination of both zones will remedy this.

It is possible to change the plate mass, input power and bi-metal switches to cook at different heat curves.

It is possible to design the unit to be switched on and then within a few seconds to load the egg. The heat input being designed for a specific cook duration and temperature switch off point see fig 10.

In all cases the power input (voltage x amperage) to the zones must be controlled for a designed heat up curve and a maximum temperature rise above the target cooking temperature.
It is possible to use more than one heat element in the egg zone and one or more bi-metal switches in order to construct a heat curve with different stop points and different heat input.
With the bi-metal switch control, the power input cannot be changed during the cooking cycle. The bi-metal switch has a switch on and off temperature. The range of this, say on at 125 and off at 135 leaves a ten degree range. This range, together with the plate mass, energy input and more particularly the location of the bi-metal controls (because the plates do not heat up uniformly) the heat up curve and the mode of cooking of the egg. The control would include a mechanical power off switch similar to a kettle control. It would be possible to use an adjustable bi-metal switch to allow for a change in the off or on point.

With electronic controls a thermistor or thermocouple or similar is used to monitor plate temperature under the egg, this is used by the control system to regulate the input power to one or both zones. The control system can be designed to perform more than one defined cooking mode or cycle.

To enable washing of the cooking parts or removal of the egg to the plate, the steam or egg zones may be detachably attached from each other or the heated bases. In this case the electrical power may be connected through the base, adjoined parts or the handle. This would require the heating elements themselves to be detachable.

The egg cooking plate is so designed to allow for easy removal of the egg from the front with a thin spatula, the front plate radius being large and smooth.
The plates may be non-stick coated. Some non-stick coatings make water globulate when boiling. Different non-stick coatings can be used for the steam and egg zones, a textured surface can provide a greater surface area in the steam zone to aid boiling.

Modern plastics capable of high temperatures may be used for some parts.

Water is added to the steam zone by the user with a spoon or dedicated measuring device. It can be added automatically by injection or dropping and this can be coordinated with the heat input. The water can be added through the lid, base, handle. The raising or lowering of the lid may effect the deposition of the correct amount of water into the device. Other ways not limiting are:
a. the lid can contain a small cup, water can be added and when the lid is lowered the water is poured onto the heated plate.
b. The lid can be connected to a small water hopper with a pipe. The pipe will be connected to a cylinder and piston (like a spray bottle), when the lid is raised it will draw a small amount of water into it, when lowered it will squirt atomised water onto the heated plate - this will aid boiling and stop globulisation.
c. There could be a small vessel above the lid or on the lid with a plunger and valve, pressing the plunger could allow a small quantity of water to drop onto the heat zone.

### Addition features

Any number of sets of ridges could be formed within one plate. Any number of plates containing one set of ridges could form a cooking appliance each with separate lids. The lids and base may be hinged together.

The lid may be shaped to affect the flow of steam around the cooking eggs.

The "plate" may have a contoured underside in order to fit into the base unit's heating element to make good contact with said for good heat transfer. The cooking plate and base may have steam ducts in order that steam can be forced down them to help speed up the heating of the cooking plate.

The lid can be controlled to lift after a set period of time.
The cooking plate can be controlled to lift away from the base heat source in order to slow the cooking after a set period has elapsed.
The heated base may be switched on when the cooking plate is fitted onto it by integral switches. There will be over heat controls also. If the steam making portion is separate this too can be heated from the base when it is located onto the base

The steam may be generated in a zone not on the same level as the egg cooking area, so that water can be put into it when the lid is closed or injected from a water reservoir. The large inner radii of the outer ridge allows the user to easily slide the egg out of the cooking area by simply tilting it without using other utensils. The egg plate can be so designed that eggs of different sizes slip back to its base and cook in the same area.

There can be audible and visual means of showing the user when the base or plate are hot enough and when the egg is cooked or a timer has elapsed or any other cooking characteristic. An led or LCD or similar screen can be used for showing the user cooking variables or characteristics.

The lid may be connected to the base unit, the lid being controlled to open after a timer has elapsed.

The egg cook zone and steam zones may be designed with different thickness in order to heat up at different speeds.

The outer raised portion may house a lip for the lid, this lip not being continuous, or the outer ridge having a portion of reduced height that allows steam to escape.

Where a separate heat source is used, such as with a hob, the base may be contoured to provide a good contact surface or to keep the plate from slipping off the base unit.

The heating elements may be so designed that areas of each plate may heat up at different rates or to different temperatures.

The lid may be raised after a timer has elapsed in order to slow the cooking down at the end of the defined cooking period.

This invention offers several advantages.

Uses less energy - only about 20 seconds of power on the quick cook cycle.
Quicker eggs can be cooked in 60 seconds.
more consistent
Repeatable cooking quality
Fries or poaches - multi programmes.
Needs no special knowledge.
Easy to get the cooked egg out.
Easy to clean
Uses non stick coatings so that oil is not used
More healthy
Small footprint for placement on countertops.
Can make allowances for human error.
Multi-mode cooking each subsequently cooked egg can be cooked differently.

## Claims

1. An egg cooking appliance comprising:
at least one plate having an upper surface or surfaces defining at least a first area for receipt of a de-shelled egg constituting an egg cooking zone (1), and a second area for receipt of a quantity of water constituting a steam generating zone (2);
a lid which, in use, covers the first and second areas;
electrical heating means for heating the plate or plates; and **characterised by** at least one temperature sensor to monitor, when in use, plate temperature under the egg, the appliance including electronic controls, and wherein the temperature sensor is an electronic component which indicates the plate temperature to the electronic controls and wherein the plate temperature is used by the electronic controls to regulate the power supplied by the electrical heating means to the plate or plates, wherein the electronic controls react after insertion of an egg to the temperature drop of the plate in accordance with a cook cycle program.

2. An egg cooking appliance according to claim 1, wherein the electronic controls, in accordance with the cook cycle program, dynamically control the heat up curve.

3. An egg cooking appliance according to claim 1, wherein the cook cycle program is selectable by a user.

4. An egg cooking appliance according to any one of the preceding claims, wherein the temperature drop caused by insertion of the egg is used by the control system as a trigger for activation or deactivation of a defined cooking cycle, or to inform a user that a cooking cycle should begin or end.

5. An egg cooking appliance according to claim 1, wherein the temperature sensor is a thermistor or thermocouple.

6. An egg cooking appliance according to claim 1, wherein the electronic controls can perform more than one defined cooking mode or cycle selected or set by the user.

7. An egg cooking appliance according to claim 1, wherein the appliance allows a predefined cooking curve which may include a pre-heat phase during which the cooking plates are heating up, and a cooking phase at or near a desired cooking temperature.

8. An egg cooking appliance according to any one of the preceding claims, further comprising a display and a user interface.

9. An egg cooking appliance according to claim 1, wherein the heating means is selected from an integrated heating element, thick film element, or bonded heating element.

10. An egg cooking appliance according to claim 1, wherein the electrical heating means is provided directly on or in the plate or plates or the electrical heating means is arranged in or on a heating base unit, the plate or plates being in thermal contact with the heating base unit.

11. An egg cooking appliance according to claim 1, wherein the plate or plates are detachable from each other or the heating base unit or mounting base unit or control unit, or where each plate can be detachably attached to the heat source.

12. An egg cooking appliance according to claim 1, wherein the appliance comprises a unitary plate having a peripheral lip (3) and an internal ridge (4) or partition extending across the plate to define a relatively larger egg cooking zone (1) and a relatively smaller steam generating zone (2).

13. An egg cooking appliance according to claim 1, wherein the appliance comprises separate plates or recesses respectively defining the egg cooking zone (1) and steam generating zone (2).

14. An egg cooking appliance according to claim 1, wherein the egg cooking zone (1) recess is designed so that eggs of different sizes or masses are cooked in the same relative place in the plate and with a large smooth front radius.

15. An egg cooking appliance according to claim 5 comprising audible or visual means of showing that the appliance is in a stand-by mode, is in a pre-heat zone, has attained cook temperature, is in a cooking phase or has finished or when a time has elapsed.

## Patentansprüche

1. Eierkocher, aufweisend:
mindestens eine Platte mit einer oberen Oberfläche oder mit oberen Oberflächen, mindestens einen ersten Bereich zum Aufnehmen eines geschälten Eies, der eine Eiergarzone (1) bildet, und einen zweiten Bereich zum Aufnehmen einer Wassermenge, der eine Dampferzeugungszone (2) bildet, aufweisend;
einen Deckel, der im Gebrauch die ersten und zweiten Bereiche abdeckt;
eine elektrische Heizeinrichtung zum Erwärmen der Platte oder der Platten; und
**gekennzeichnet durch** mindestens einen Temperatursensor, der im Gebrauch die Plattentemperatur unter dem Ei überwacht, wobei der Eierkocher elektronische Steuereinrichtungen aufweist, und wobei der Temperatursensor eine elektronische Komponente ist, die den elektronischen Steuereinrichtungen die Plattentemperatur angibt,
und wobei die Plattentemperatur von den elektronischen Steuereinrichtungen verwendet wird, um die Leistung zu regeln, die von der elektrischen Heizeinrichtung zu der Platte oder den Platten geliefert wird, wobei die elektronischen Steuereinrichtungen nach Einbringung eines Eies auf den Temperaturabfall der Platte gemäß einem Garzyklusprogramm reagieren.

2. Eierkocher nach Anspruch 1, wobei die elektronischen Steuereinrichtungen die Erwärmungskurve entsprechend dem Garzyklusprogramm dynamisch steuern.

3. Eierkocher nach Anspruch 1, wobei das Garzyklusprogramm von einem Anwender ausgewählt werden kann.

4. Eierkocher nach einem der vorangehenden Ansprüche, wobei der Temperaturabfall, der durch die Einbringung des Eies verursacht wird, vom Steuersystem als Auslöser für die Aktivierung oder Deaktivierung eines definierten Garzyklus oder zum Informieren eines Anwenders darüber, dass ein Garzyklus beginnen oder enden sollte, verwendet wird.

5. Eierkocher nach Anspruch 1, wobei der Temperatursensor ein Thermistor oder ein Thermoelement ist.

6. Eierkocher nach Anspruch 1, wobei die elektronischen Steuereinrichtungen mehr als einen definierten Garmodus oder zyklus, der vom Anwender ausgewählt oder eingestellt wird, ausführen kann.

7. Eierkocher nach Anspruch 1, wobei der Eierkocher eine vordefinierte Garkurve ermöglicht, die eine Vorheizphase, während der die Garplatten aufgewärmt werden, und eine Garphase bei oder nahe einer gewünschten Gartemperatur umfasst.

8. Eierkocher nach einem der vorangehenden Ansprüche, ferner eine Anzeige und eine Nutzerschnittstelle aufweisend.

9. Eierkocher nach Anspruch 1, wobei die Heizeinrichtung aus einem integrierten Heizelement, einem Dickfilmelement oder einem gebondeten Heizelement ausgewählt ist.

10. Eierkocher nach Anspruch 1, wobei die elektrische Heizeinrichtung direkt auf oder in der Platte oder den Platten vorgesehen ist oder die elektrische Heizeinrichtung in oder auf einer Heizungsbasiseinheit vorgesehen ist, wobei die Platte oder die Platten in Wärmekontakt mit der Heizungsbasiseinheit steht bzw. stehen.

11. Eierkocher nach Anspruch 1, wobei die Platte oder die Platten voneinander oder von der Heizbasiseinheit oder Anbaubasiseinheit oder Steuereinheit gelöst werden kann bzw. können, oder wobei jede Platte lösbar an der Wärmequelle angebracht werden kann.

12. Eierkocher nach Anspruch 1, wobei der Eierkocher eine einheitliche Platte mit einer peripheren Lippe (3) und einem inneren Wulst (4) oder einer Teilung aufweist, der bzw. die quer über die Platte verläuft, um eine relativ größere Eiergarzone (1) und eine relativ kleinere Dampferzeugungszone (2) zu definieren.

13. Eierkocher nach Anspruch 1, wobei der Eierkocher separate Platten oder Eintiefungen aufweist, die jeweils die Eiergarzone (1) und Dampferzeugungszone (2) definieren.

14. Eierkocher nach Anspruch 1, wobei die Eintiefung der Eiergarzone (1) so gestaltet ist, dass Eier verschiedener Größe oder verschiedenen Gewichts an derselben relativen Stelle in der Platte und mit einem großen glatten Frontradius gegart werden.

15. Eierkocher nach Anspruch 5, akustische oder optische Einrichtungen aufweisend, die anzeigen, dass der Eierkocher in einem Bereitschaftsmodus ist, in einer Vorwärmzone ist, die Gartemperatur erreicht, in einer Garphase ist oder eine solche beendet hat, oder wann eine Zeit abgelaufen ist.

## Revendications

1. Un appareil de cuisson d'oeufs comprenant :
au moins une plaque possédant une ou des surfaces supérieures définissant au moins une première zone pour la réception d'un oeuf décoquillé constituant une zone de cuisson d'oeufs (1) et une deuxième zone pour la réception d'une quantité d'eau constituant une zone de génération de vapeur (2),
un couvercle qui, en utilisation, recouvre les première et deuxième zones,
un moyen de chauffage électrique pour le chauffage de la ou des plaques, et **caractérisé par** au moins un capteur de température destiné à surveiller, lorsqu'il est en utilisation, une température de plaque sous l'oeuf, l'appareil comprenant des commandes électroniques, et
où le capteur de température est un composant électronique qui indique la température de plaque aux commandes électroniques et où la température de plaque est utilisée par les commandes électroniques de façon à réguler la puissance fournie par le moyen de chauffage électrique à la ou aux plaques, où les commandes électroniques réagissent après insertion d'un oeuf à la chute de température de la plaque conformément à un programme de cycle de cuisson.

2. Un appareil de cuisson d'oeufs selon la Revendication 1, où les commandes électroniques, conformément au programme de cycle de cuisson, commandent dynamiquement la courbe de montée en température.

3. Un appareil de cuisson d'oeufs selon la Revendication 1, où le programme de cycle de cuisson peut être sélectionné par un utilisateur.

4. Un appareil de cuisson d'oeufs selon l'une quelconque des Revendications précédentes, où la chute de température provoquée par l'insertion de l'oeuf est utilisée par le système de commande en tant que déclencheur d'activation ou de désactivation d'un cycle de cuisson défini, ou pour informer un utilisateur qu'un cycle de cuisson doit commencer ou se terminer.

5. Un appareil de cuisson d'oeufs selon la Revendication 1, où le capteur de température est un thermistor ou un thermocouple.

6. Un appareil de cuisson d'oeufs selon la Revendication 1, où les commandes électroniques peuvent exécuter plus d'un mode ou cycle de cuisson défini sélectionné ou réglé par l'utilisateur.

7. Un appareil de cuisson d'oeufs selon la Revendication 1, où l'appareil permet une courbe de cuisson prédéfinie qui peut comprendre une phase de préchauffage au cours de laquelle les plaques de cuisson montent en température et une phase de cuisson à ou au voisinage d'une température de cuisson souhaitée.

8. Un appareil de cuisson d'oeufs selon l'une quelconque des Revendications précédentes, comprenant en outre un écran d'affichage et une interface utilisateur.

9. Un appareil de cuisson d'oeufs selon la Revendication 1, où le moyen de chauffage est sélectionné parmi un élément de chauffage intégré, un élément à film épais ou un élément de chauffage collé.

10. Un appareil de cuisson d'oeufs selon la Revendication 1, où le moyen de chauffage électrique est installé directement sur ou dans la ou les plaques ou le moyen de chauffage électrique est agencé sur ou dans une unité de base de chauffage, la ou les plaques étant en contact thermique avec l'unité de base de chauffage.

11. Un appareil de cuisson d'oeufs selon la Revendication 1, où la ou les plaques sont détachables les unes des autres ou de l'unité de base de chauffage ou de l'unité de base de montage ou de l'unité de commande, ou où chaque plaque peut être rattachée de manière amovible à la source de chaleur.

12. Un appareil de cuisson d'oeufs selon la Revendication 1, où l'appareil comprend une plaque unitaire possédant une lèvre périphérique (3) et une nervure (4) ou partition interne s'étendant en travers de la plaque de façon à définir une zone de cuisson d'oeufs relativement plus grande (1) et une zone de génération de vapeur relativement plus petite (2).

13. Un appareil de cuisson d'oeufs selon la Revendication 1, où l'appareil comprend des plaques ou des évidements distincts définissant respectivement la zone de cuisson d'oeufs (1) et la zone de génération de vapeur (2).

14. Un appareil de cuisson d'oeufs selon la Revendication 1, où l'évidement de la zone de cuisson d'oeufs (1) est conçu de sorte que des oeufs de différentes tailles ou masses soient cuits au même endroit relatif de la plaque et avec un grand rayon avant lisse.

15. Un appareil de cuisson d'oeufs selon la Revendication 5 comprenant un moyen visuel ou sonore de montrer que l'appareil est dans un mode veille, est dans une zone de préchauffage, a atteint une température de cuisson, est dans une phase de cuisson ou a terminé ou lorsqu'une durée s'est écoulée.
